(19) Europäisches Patentamt
European Patent Office
Office européen des brevets

(11) EP 0 665 046 B1

(12) FASCICULE DE BREVET EUROPEEN

(45) Date de publication et mention
de la délivrance du brevet:
**01.10.1997 Bulletin 1997/40**

(51) Int. Cl.$^6$: **B01D 53/14**, E21B 43/40

(21) Numéro de dépôt: **95400198.8**

(22) Date de dépôt: **30.01.1995**

(54) **Procédé de prétraitement d'un gaz natural contenant de hydrogène sulfuré**

Verfahren zur Vorbehandlung von H2S-haltigem Erdgas

Process of pre-treatment of natural gas containing H2S

(84) Etats contractants désignés:
**BE DE DK ES GB IT NL SE**

(30) Priorité: **01.02.1994 FR 9315675**

(43) Date de publication de la demande:
**02.08.1995 Bulletin 1995/31**

(73) Titulaire: **INSTITUT FRANCAIS DU PETROLE**
**92502 Rueil-Malmaison (FR)**

(72) Inventeurs:
• **Minkkinen, Ari**
**F-78860 Saint Nom La Breteche (FR)**

• **Benayoun, Daniel**
**F-78500 Sartrouville (FR)**
• **Barthel, Yves**
**F-78230 Le Pecq (FR)**

(74) Mandataire: **Andreeff, François**
**INSTITUT FRANCAIS DU PETROLE**
**4, avenue de Bois-Préau**
**92502 Rueil-Malmaison (FR)**

(56) Documents cités:
**EP-A- 0 362 023**

## Description

L'invention concerne un procédé de prétraitement d'un gaz naturel très acide, contenant une quantité substantielle d'hydrogène sulfuré ($H_2S$) auquel peut être associé du dioxyde de carbone ($CO_2$).

Ce type de gaz naturel a déjà été l'objet d'un brevet EP-B-0 362 023 déposé par la demanderesse.

Lorsqu'un producteur de gaz est confronté au traitement d'un gaz naturel très acide contenant, par exemple, plus de 20 % en moles d'hydrogène sulfuré, plus spécialement en sachant que la capacité de production de gaz est supérieure à 2 millions m$^3$ par jour et que la production de soufre n'est pas justifiée économiquement, ce producteur de gaz est face à un dilemme. Comment éliminer la quantité importante d'hydrogène sulfuré tout en respectant toutes les normes de sécurité et de l'environnement ? Comment réduire la consommation d'énergie relative à la séparation et l'élimination de l'hydrogène sulfuré ?

Parfois, l'élimination de l'hydrogène sulfuré et du dioxyde de carbone provenant du gaz naturel peut être résolue par la réinjection du mélange récupéré dans un réservoir en voie d'épuisement, ce qui permet d'éviter l'installation en aval d'unités de récupération du soufre qui sont chères et dont la consommation en énergie est élevée.

Pour pouvoir vendre un gaz contenant moins de 3 ppm en volume d'hydrogène sulfuré, on doit mettre en oeuvre des techniques de séparation qui doivent être sélectives vis à vis de ce poison, puisque l'enlèvement simultané de dioxyde de carbone et d'hydrogène sulfuré ne nécessite pas les mêmes contraintes de pureté. En effet, 2 à 4 % en volume de $CO_2$ sont tolérés dans le gaz destiné à la vente. Cet objectif peut être atteint par un procédé mettant en oeuvre deux étapes, une étape de réduction partielle de la teneur en acides par un procédé de séparation par membranes, suivie d'une étape de lavage du gaz ainsi en partie purifié, par un solvant ou une amine sélective. Il est en effet connu, que des membranes sélectives laissent diffuser $H_2S$ et $CO_2$ plus facilement que les hydrocarbures (méthane notamment) contenus dans le gaz naturel. Ce procédé, a priori simple, présente cependant de sérieux inconvénients, notamment quand le gaz acide riche en $H_2S$ doit être réinjecté dans le réservoir, à haute pression.

Le principal inconvénient d'un prétraitement par perméation sur membrane réside dans le fait que le perméat riche en $H_2S$ et en $CO_2$ doit être récupéré en aval de la membrane sous une très faible pression pour que le procédé devienne efficace. Il s'en suit que, si le gaz n'est ni brûlé à la torche, ni envoyé dans une unité de récupération du soufre, il devient impératif de le recomprimer à la pression du réservoir, ce qui entraîne un coût de compression élevé et une consommation d'énergie importante.

Un second inconvénient du procédé de perméation sur membrane provient du fait que cette membrane n'est pas parfaitement sélective aux gaz acides puisqu'elle permet une diffusion considérable du méthane dans le perméat. La perte en méthane commercialisable peut représenter 10 à 15% de la charge introduite.

Un des objets de l'invention est par conséquent de remédier aux inconvénients mentionnés ci-avant.

Un autre objet est de prétraiter un gaz naturel très riche en $H_2S$ et en $CO_2$ afin de le rendre exploitable et commercialisable, sans nuire à l'environnement.

Un autre objet est de déshydrater ce gaz et d'éliminer la majorité des constituants acides, sous forme liquide dans un réservoir en voie d'épuisement.

De manière générale l'invention concerne un procédé de prétraitement d'un gaz naturel sous pression en provenance d'au moins un puits de production, saturé en eau et contenant une majeure partie d'hydrocarbures et une quantité substantielle d'hydrogène sulfuré, comprenant les étapes suivantes:

a) On met en contact dans au moins une zone de mise en contact (5) et de vaporisation, dans des conditions de contact appropriées, une partie au moins du gaz naturel avec au moins une partie d'un condensat recyclé liquide provenant de l'étape (d) ci-après, et on récupère en tête de la dite zone, une phase vapeur contenant de l'hydrogène sulfuré et des hydrocarbures et en fond de la dite zone, un effluent liquide contenant une majeure partie de l'hydrogène sulfuré, de l'eau et une mineure partie d'hydrocarbures.

b) On refroidit et on condense au moins en partie la phase vapeur par une étape de réfrigération ou de détente dans des conditions adéquates dans une zone de réfrigération ou de détente.

c) On sépare le condensat obtenu dans une zone de séparation et on récupère un gaz enrichi en hydrocarbures et appauvri en hydrogène sulfuré et un condensat liquide enrichi en hydrogène sulfuré et contenant des hydrocarbures.

d) On recycle ledit condensat dans la zone de mise en contact et

c) On réintroduit l'effluent liquide dans ledit puits de production ou dans un autre puits.

Par hydrocarbures, on entend essentiellement du méthane et de faibles pourcentages d'éthane, de propane et de butane. Le gaz naturel acide peut présenter une pression partielle en hydrogène sulfuré d'au moins 5 bar et de préférence d'au moins 10 bar (1 bar= $10^5$ Pa). Il peut contenir également du dioxyde de carbone.

Afin de réaliser un bon flash dans la zone de mise en contact (strippeur) entre le condensat liquide et le gaz naturel très acide sortant du puits, ce condensat peut être préchauffé au moins en partie par un échangeur de chaleur pour vaporiser une partie au moins des hydrocarbures qui y est contenue en trop grande quantité.

Selon une autre variante du procédé, il peut être préchauffé par une partie au moins de la phase vapeur quittant la zone de mise en contact, dans une zone d'échange thermique appropriée. Il peut être avantageux de combiner ces deux modes de préchauffage de façon à mieux vaporiser les hydrocarbures qui doivent être récupérés et à augmenter la solubilité de l'eau dans le courant liquide contenant $H_2S$.

La vaporisation du méthane et des hydrocarbures légers dissous dans le mélange peut directement refroidir la charge gazeuse provenant du puits, de 5 à 10°C par exemple, ce qui peut entraîner la précipitation d'hydrates formés en présence d'eau libre et de $H_2S$. Ceux-ci sont récupérés dans la phase liquide qui est réinjectée dans le réservoir en voie d'épuisement. L'enceinte de mise en contact des courants liquide et gazeux, de préférence un cyclone, peut être, à cet égard, adaptée à la récupération de ces hydrates dans sa partie inférieure.

La solubilité de l'eau dans la phase $H_2S$ liquide est plutôt élevée (par exemple, plus de 1 % en moles dans les conditions expérimentales: 25°C, 85 bar absolu) de telle sorte que sensiblement toute l'eau du gaz acide entrant dans l'enceinte peut être déplacée par solubilisation dans la phase liquide riche en $H_2S$ constituant ledit effluent liquide qui est réintroduit dans le réservoir. Il s'agit en fait d'une étape d'extraction de l'eau qui minimise ou élimine complètement la condensation d'eau et la formation d'eau libre dans l'étape de réfrigération et de condensation.

Cependant, si la phase vapeur sortant en tête de cette enceinte contient encore une quantité substantielle d'eau, on peut introduire en amont de la zone de réfrigération, une quantité appropriée de méthanol dans ladite phase vapeur pour prévenir la formation d'hydrate dans la zone de réfrigération.

L'eau et l'alcool, séparés après condensation, du condensat liquide dans le ballon séparateur, peuvent être recyclés, selon une première variante, avec le condensat dans la zone de mise en contact. Une partie de ce méthanol pourra être vaporisée avec la phase gazeuse, une autre partie en phase liquide sera réinjectée dans le puits.

Selon une autre variante, l'eau et le méthanol séparés après condensation, du condensat, peuvent être envoyés dans une zone de strippage multi-étagée fonctionnant à contre-courant et utilisant une partie au moins de la phase vapeur. On récupère alors en tête de la zone de strippage, un effluent vapeur enrichi en méthanol que l'on recycle en amont de la zone de réfrigération et en fond, de l'eau qui peut être réintroduite dans le réservoir. Cette zone de strippage peut avantageusement être intégrée dans la zone de mise en contact du condensat liquide avec le gaz naturel.

Selon une autre caractéristique avantageuse du procédé, le condensat liquide riche en $H_2S$ peut être mélangé au gaz naturel en amont de l'enceinte de mise en contact par l'intermédiaire d'un mélangeur statique, un éjecteur, un pulvérisateur ou du simple fait d'une longueur suffisante de tuyau.

Les conditions opératoires du procédé sont généralement les suivantes:

a) Enceinte de mise en contact
T° = 0 à 100°C, de préférence 20 à 60°C
P > 10 bar absolu, de préférence 40 à 100 bar

b) Zone de réfrigération et de condensation
T°C = -80°C à +30°C, de préférence -40°C à 0°C
P > 10 bar absolu, de préférence 40 à 100 bar.

c) Température de préchauffage
T°C = -10°C à +90°C, de préférence +10 à +50°C.

Il peut être avantageux de comprimer le gaz naturel en sortie du puits de production, notamment lorsque le réservoir est en voie d'épuisement.

L'invention présente donc l'avantage, de concentrer le gaz naturel en méthane et simultanément de le déshydrater. Elle permet par ailleurs de réintroduire un effluent enrichi en H2S dans un puits d'injection, sous forme liquide et donc à un coût moindre, s'il s'avère nécessaire d'utiliser un dispositif de pompage.

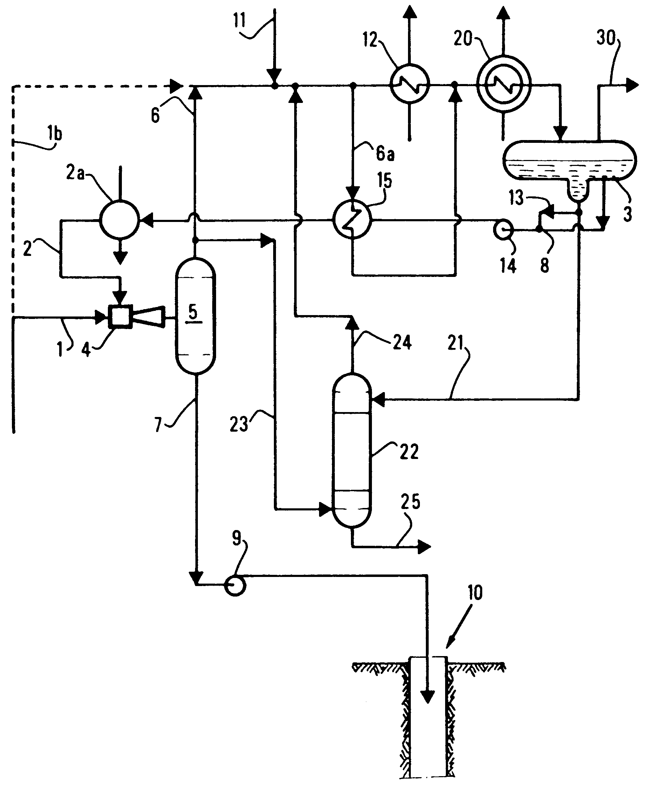

L'invention sera mieux comprise au vu de la figure et de l'exemple qui illustrent de manière non limitative le procédé.

Un gaz naturel très acide provenant d'un puits de production, à une pression de 83 bar et une température de 50°C, saturé en eau (1940 ppm en moles) et contenant 34 % en moles de $H_2S$, 11 % en moles de $CO_2$ et 55 % en moles de méthane (moins de 1 % en poids de $C_2+$) est introduit tangentiellement par une ligne 1 dans une enceinte de mise en contact de type cyclone 5. L'intégralité du gaz peut ne pas être envoyée dans le cyclone 5. Une partie du gaz, en effet peut être introduit par une ligne 1b (en pointillé) dans l'unité de prétraitement, en aval du cyclone 5. En amont du cyclone 5, une ligne 2 et un pulvérisateur 4 recyclent dans la ligne 1 un condensat liquide riche en $H_2S$ et en $CO_2$, contenant par ailleurs une quantité substantielle de méthane et qui provient d'une enceinte de séparation 3. Ce condensat est préchauffé jusqu'à 30°C environ par un échangeur externe 2a et par un échangeur de chaleur 15 qui cède indirectement de la chaleur provenant d'une partie de la phase vapeur (ligne 6a) en provenance de l'enceinte 5.

La mise en contact est réalisée sensiblement à la pression d'entrée du gaz acide (82 bar par exemple) et une température de 38°C. Un flash et un strippage sont effectués dans le cyclone 5. Des phases liquide et vapeur sont séparées et refroidies à 25°C (température en dessous de celle de la formation d'hydrates) et on récupère en fond de cyclone, conique de préférence, à une pression de 82 bar, un effluent liquide, par la ligne 7, enrichi en $H_2S$, en $CO_2$, en eau (hydrates et eau libre, soluble) et en soufre libre. Cet effluent contient donc sensiblement toute l'eau et seulement 8,5 % de méthane. Une pompe 9 centrifuge, adaptée au pompage de $H_2S$ (de type sans joint) est utilisée, si nécessaire, pour réinjecter l'effluent liquide riche en $H_2S$ et $CO_2$ dans un puits de réinjection 10 qui peut être le même puits d'où provient le gaz naturel ou un autre puits. La chaleur de pompage n'est pas suffisante pour fondre les hydrates transportés.

En tête de cyclone 5, on récupère par une ligne 6 une phase gazeuse contenant seulement 540 ppm d'eau, de l'hydrogène sulfuré, du $CO_2$ et du méthane. Celle-ci traverse des dispositifs de refroidissement et de condensation, par exemple un échangeur thermique 12 conventionnel gaz-gaz suivi d'un refroidisseur 20 au propane, qui la refroidissent et la condensent en partie au moins à une température de -18°C par exemple. Pour éviter de plus, la formation d'hydrates et de glace, du méthanol peut être introduit dans la ligne 6 par une ligne 11 en amont de l'échangeur 12. L'eau non solubilisée dans la phase gazeuse peut ainsi être inhibée par un ajout de 55 % en poids de méthanol, par exemple.

Le gaz enrichi en méthane et le condensat obtenu ainsi qu'éventuellement le mélange eau-méthanol sont séparés dans un ballon séparateur 3 à une pression de 81 bar et une température de -18°C. Le mélange eau-méthanol récupéré en fond de ballon 3 par la ligne 13 peut être introduit dans une ligne 8 de recyclage du condensat, une fois séparé.

Selon une autre variante, le méthanol et l'eau récupérés en fond du ballon 3 peuvent être envoyés par une ligne 21 en tête d'une zone de strippage 22 multi-étagée, opérant à contre-courant, qui utilise comme gaz de strippage, une partie de la phase vapeur provenant du cyclone 5. Celle-ci est introduite par une ligne 23 en fond de la zone de strippage. La majorité du méthanol est récupérée en tête par une ligne 24 et recyclée dans la ligne 6 en amont du refroidisseur. L'eau est récupérée en fond de la zone de strippage par une ligne 25.

Le condensat, riche en $H_2S$ et en $CO_2$ et contenant encore du méthane et ledit mélange eau-méthanol sont recyclés par les lignes 8 et 2 et une pompe 14 semblable à la pompe 9, vers l'enceinte 5 de mise en contact des deux phases liquide et gaz, après avoir été préchauffé dans l'échangeur 15 comme il a été dit ci-avant.

En tête du ballon 3, on récupère par ailleurs le gaz enrichi en méthane et contenant environ 15 % de $H_2S$ et 11 % de $CO_2$, ces teneurs permettant de réduire la taille et la consommation énergétique des unités aval (unités d'amines ou d'autres techniques décrites dans les brevets de la Demanderesse EP-442767 et US5127231) d'élimination complète de $H_2S$.

Un bilan matière est présenté dans le tableau ci-après.

| Bilan matière (% moles) | | | | | |
|---|---|---|---|---|---|
| Constituants | Charge de gaz naturel | Phase vapeur | Condensat recyclé | Gaz enrichi | Effluent liquide |
| lignes | 1 | 6 | 8-2 | 30 | 7 |
| $C_1$ | 54 | 48,3 | 25,2 | 72,7 | 14,4 |
| $C_2$ plus | 1 | 1,1 | 1,4 | 0,8 | 1,6 |
| $CO_2$ | 11 | 13,2 | 15,2 | 11,1 | 10,5 |
| $H_2S$ | 34 | 37,4 | 58,2 | 15,4 | 73,5 |
| Total | $\overline{100}$ | $\overline{100}$ | $\overline{100}$ | $\overline{100}$ | $\overline{100}$ |
| Volume ($10^6$ m³/jour) | 6,10 | 8,55 | - | 4,15 | - |
| kmoles/heure | 10758 | 15072 | 7741 | 7331 | 3427 |
| Masse molaire | 25,5 | 26,8 | 31,1 | 22,1 | 32,7 |
| Tonnes/heure | 274,3 | 403,9 | 241,9 | 162 | 112,3 |
| Température (°C) | 38 | 38 | -18 | -18 | 38 |
| Pression (MPa) | 8,2 | 8,2 | 8 | 8 | 8,2 |
| Teneur en $H_2O$ ppm (moles) | 1940 | 543 | 1000 | 60 | 5960 |

Finalement, on constate une perte totale de méthane et d'hydrocarbures plus lourds, de 9,2 % lors de l'élimination de 69 % de la quantité de $H_2S$ et de 33 % de la quantité de $CO_2$.

**Revendications**

1. Procédé de prétraitement d'un gaz naturel sous pression en provenance d'au moins un puits de production, saturé en eau et contenant une majeure partie d'hydrocarbures et une quantité substantielle d'hydrogène sulfuré, comprenant les étapes suivantes:

   a) On met en contact dans au moins une zone de mise en contact (5) et de vaporisation et dans des conditions de contact appropriées une partie au moins du gaz naturel (1) avec au moins une partie d'un condensat (2) recyclé liquide provenant de l'étape (d) ci-après, et on récupère en tête de la dite zone, une phase vapeur (6) contenant de l'hydrogène sulfuré et des hydrocarbures et en fond de la dite zone, un effluent liquide (7) contenant une majeure partie de l'hydrogène sulfuré, de l'eau et une mineure partie d'hydrocarbures.

   b) On refroidit et on condense au moins en partie la phase vapeur par une étape de réfrigération ou de détente dans des conditions adéquates dans une zone (20) de réfrigération ou de détente.

   c) On sépare le condensat obtenu dans une zone (3) de séparation et on récupère un gaz (30) enrichi en hydrocarbures et appauvri en hydrogène sulfuré et un condensat (2) liquide enrichi en hydrogène sulfuré et contenant des hydrocarbures.

   d) On recycle ledit condensat dans la zone de mise en contact (5); et

   c) On réintroduit l'effluent liquide (7) dans ledit puits de production ou dans un autre puits.

2. Procédé selon la revendication 1 dans lequel le condensat (2) est préchauffé au moins en partie par un échangeur de chaleur externe (2a).

3. Procédé selon les revendications 1 et 2 dans lequel le condensat est préchauffé par une partie au moins de la phase vapeur dans une zone d'échange thermique (15).

4. Procédé selon l'une des revendications 1 à 3 dans lequel le condensat est recyclé en amont de la zone de mise en contact (5).

5. Procédé selon l'une des revendications 1 à 4 dans lequel la phase vapeur contient une quantité substantielle d'eau et dans lequel on introduit en amont de la zone de réfrigération dans la phase vapeur une quantité appropriée de méthanol (11).

6. Procédé selon la revendication 5 dans lequel l'eau et le méthanol sont séparés, après condensation, du condensat et recyclés avec le condensat (2).

7. Procédé selon la revendication 5, dans lequel l'eau et le méthanol sont séparés, après condensation, du condensat et envoyés dans une zone de strippage (22) multi-étagée utilisant une partie au moins de la phase vapeur (23) et on récupère en tête de la zone de strippage un effluent (24) vapeur enrichi en méthanol que l'on recycle en amont de la zone de réfrigération et en fond, de l'eau (25).

8. Procédé selon l'une des revendications 1 à 7 dans lequel les conditions opératoires sont les suivantes:

   a) Zone de mise en contact
   T°C = 0 à 100°C, de préférence 20 à 60°C
   P > 10 bar absolu, de préférence 40 à 100 bar absolu

   b) Zone de séparation après réfrigération
   T°C = -80°C à +30°C, de préférence -40°C à 0°C
   P > 10 bar, de préférence 40 à 100 bar

   c) Température de préchauffage

-10 à 90°C, de préférence 10 à 50°C.

**9.** Procédé selon d'une des revendications à 1 à 8 dans lequel la zone de mise en contact est un séparateur cyclonique.

**10.** Procédé selon l'une des revendications 1 à 9, dans lequel le gaz naturel sous pression présente une pression partielle en hydrogène sulfuré d'au moins 5 bar et de préférence d'au moins 10 bar.

**Claims**

**1.** A process for the pretreatment of a pressurized natural gas which is saturated with water and contains mainly hydrocarbons and a substantial quantity of hydrogen sulphide, from at least one producing well, comprising the following steps :

    a) at least a portion of the natural gas (1) is brought into contact with at least a portion of a recycled liquid condensate (2) from step d) below in a contact and vaporizing zone (5) under appropriate contact conditions, a vapour phase (6) containing hydrogen sulphide and hydrocarbons is recovered overhead and a liquid effluent (7) containing a major portion of the hydrogen sulphide, water and a minor portion of hydrocarbons is recovered from the bottom;
    b) at least a portion of the vapour phase is cooled and condensed in a cooling or depressurising step under suitable cooling or depressurising conditions;
    c) the condensate obtained is separated in a separation zone (3) and a gas (30) which is enriched in hydrocarbons and depleted in hydrogen sulphide is recovered along with a liquid condensate (2) which is enriched in hydrogen sulphide and contains hydrocarbons;
    d) said condensate is recycled to the contact zone (5), and
    e) the liquid effluent is reintroduced into said producing well or into a different well.

**2.** A process according to claim 1, wherein the condensate (2) is preheated at least in part by an external heat exchanger (2a).

**3.** A process according to claim 1 or claim 2, wherein the condensate is preheated by at least a portion of the vapour phase in a heat exchange zone (15).

**4.** A process according to any one of claims 1 to 3, wherein the condensate is recycled upstream of the contact zone (5).

**5.** A process according to any one of claims 1 to 4, wherein the vapour phase contains a substantial quantity of water and in which an appropriate quantity of methanol (11) is introduced upstream of the cooling zone.

**6.** A process according to claim 5, wherein the water and the methanol are separated from the condensate after condensing and recycled with the condensate (2).

**7.** A process according to claim 5, wherein the water and the methanol are separated from the condensate after condensing and sent to a multi-stage stripping zone (22) using at least a portion of the vapour phase (23), and a methanol enriched effluent vapour (24) is recovered overhead which is recycled upstream of the cooling zone, water (25) being recovered from the bottom.

**8.** A process according to any one of claims 1 to 7, wherein the operating conditions are as follows:

    a) Contact zone:
    T° = 0 to 100°C, preferably 20°C to 60°C,
    P > 10 bars absolute, preferably 40 to 100 bar;
    b) Zone for separation after cooling:
    T°C = -80°C to +30°C, preferably -40°C to 0°C,
    P > 10 bars, preferably 40 to 100 bar;
    c) Preheating temperature:
    -10°C to 90°C, preferably 10°C to 50°C.

**9.** A process according to any one of claims 1 to 8, wherein the contact zone is constituted by a cyclone separator.

**10.** A process according to any one of claims 1 to 9, wherein the pressurized natural gas has a partial pressure of hydrogen sulphide of at least 5 bar, preferably at least 10 bar.

**Patentansprüche**

**1.** Verfahren zur Vorbehandlung eines unter Druck stehenden Erdgases, das aus wenigstens einem Produktionsbohrloch stammt, mit Wasser gesättigt ist und einen größeren Anteil an Kohlenwasserstoffen und eine wesentliche Menge an Schwefelwasserstoff enthält,
die folgenden Stufen umfassend:

a) man kontaktiert in wenigstens einer Kontakt- (5) und Verdampfungszone und unter geeigneten Kontaktbedingungen wenigstens einen Teil des Ergases (1) mit wenigstens einem Teil eines flüssigen recyclierten Kondensats (2), das aus der unten stehenden Stufe (d) stammt und gewinnt am Kopf dieser Zone eine Dampfphase (6), die Schwefelwasserstoff und Kohlenwasserstoffe enthält, und am Boden dieser Zone einen flüssigen Abstrom (7), der einen größeren Anteil an Schwefelwasserstoff, Wasser und einen kleineren Anteil an Kohlenwaserstoffen enthält.

b) Man kühlt und man kondensiert wenigstens zum Teil die Dampfphase durch eine Kühl- oder Entspannungsstufe unter adäquaten Bedingungen in einer Kühl- oder Entspannungszone (20).

c) Man trennt das erhaltene Kondensat in einer Trennzone (3) und man gewinnt ein an Kohlenwasserstoffen angereichertes und an Schwefelwasserstoff verarmtes Gas (30) sowie ein flüssiges an Schwefelwasserstoff angereichertes Kondensat (2), das Kohlenwasserstoffe enthält.

d) Man recycliert dieses Kondensat in die Kontaktierungszone (5); und

e) man führt den flüssigen Abstrom (7) in dieses Produktionsbohrloch oder in ein anderes Bohrloch wieder ein.

**2.** Verfahren nach Anspruch 1, bei dem das Kondensat (2) wenigstens zum Teil durch einen äußeren Wärmeaustauscher (2a) vorgewärmt wird.

**3.** Verfahren nach den Ansprüchen 1 und 2, bei dem das Kondensat durch wenigstens einen Teil der Dampfphase in einer Wärmeaustauscherzone (15) vorgewärmt wird.

**4.** Verfahren nach einem der Ansprüche 1 bis 3, bei dem das Kondensat vor die Kontaktierungszone (5) recycliert wird.

**5.** Verfahren nach einem der Ansprüche 1 bis 4, bei dem die Dampfphase einen wesentlichen Anteil an Wasser enthält und bei dem man vor die Kühlzone in der Dampfphase eine geeignete Menge Methanol (11) einführt.

**6.** Verfahren nach Anspruch 5, bei dem Wasser und Methanol nach der Kondensierung vom Kondensat getrennt werden und mit dem Kondensat (2) recycliert werden.

**7.** Verfahren nach Anspruch 5, bei dem das Wasser und das Methanol nach der Kondensierung vom Kondensat getrennt und in eine mehrstufige Stripperzone (22) geschickt werden, wobei wenigstens ein Teil der Dampfphase (23) ausgenutzt wird und man gewinnt am Kopf der Stripperzone einen Dampfabstrom (24), der mit Methanol angereichert ist, den man vor die Kühlzone recycliert und am Boden Wasser (25).

**8.** Verfahren nach einem der Ansprüche 1 bis 7, bei dem die Arbeitsbedingungen die folgenden sind:

a) Kontaktierungszone
T°C = 0 bis 100°C, bevorzugt 20 bis 60°C
p > 10 bar absolut, bevorzugt 40 bis 100 bar absolut

b) Endzone nach Kühlung
T°C = -80°C bis +30°C, bevorzugt -40°C bis 0°C
p > 10 bar, bevorzugt 40 bis 100 bar

c) Vorwärmtemperatur

-10 bis 90°C, bevorzugt 10 bis 50°C

9. Verfahren nach einem der Ansprüche 1 bis 8, bei dem die Kontaktierungszone ein Zyklonseparator ist.

10. Verfahren nach einem der Ansprüche 1 bis 9, bei dem das Erdgas unter Druck einen Schwefelwasserstoff-Partialdruck von wenigstens 5 bar und bevorzugt wenigstens 10 bar aufweist.